# EUROPEAN PATENT SPECIFICATION

(11) **EP 1 013 406 B1**
(45) Date of publication and mention of the grant of the patent: **19.11.2003**
(21) Application number: 98870270.0
(22) Date of filing: 14.12.1998
(51) Int. Cl.: B29C 59/02, B42D 15/10, G03H 1/02, B65D 33/00, B44F 1/02

(54) **Duplex holographic film**
Holographischer Duplexfilm
Film holographique duplex

(43) Date of publication of application: 28.06.2000
(73) Proprietor: THE PROCTER & GAMBLE COMPANY, Cincinnati, Ohio 45202 (US)
(72) Inventor: Van Geert, Peter Maurits Maria, 1950 Kraainem (BE); Etesse, Patrick Jean François, 1040 Brussels (BE)
(74) Representative: Engisch, Gautier

(56) References cited:
- WO-A-93/16888
- WO-A-97/34170
- US-A- 4 999 075
- US-A- 5 267 753
- US-A- 5 319 475

## Description

### Technical field

The invention relates to a method for making a film structure for a holographic film.

### Background of the invention

Holographic films are used more and more widely, particularly in the packaging of consumer goods. In a holographic structure, an embossed layer is covered with a metallic layer. This has the advantage of providing a three dimensional structure effect which is catching to the eye. However, this often requires redesign of the whole film structure, particularly due to the fact that the metallic layer is not a thermo-plastic layer but a thin metallic layer.

US-A-5,319,475, issued on June 7^{th} 1994, discloses a tamper resisting holographic security seal comprising an optical diffraction pattern definin g layer which may be an embossed lacquer. It is suggested that the surface of the lacquer may be printed with a thin ink layer in a fine pattern. The embossed composite film is then metallised with aluminium.

W093/16888, published on 2^{nd} Septe mber 1993, discloses a transfer device comprising a holographically embossed lacquer layer which could be printed. The surface is then reflectively coated with a thin metallic layer of for example aluminium.

W097/34170, published on 18^{th} September 1997, discloses anticounterfeit documentation with a hologram. The surface of a hologram pattern may optionally be treated with an ink compatible layer or primer. The surface may be used for printing a signature. It is intended that the affixation of the signature serves to partially deface the holographic image both by etching the signature onto the embossed holographic pattern and by partially blocking or occulting that portion of the hologram over which the signature or data is affixed.

The present invention concerns a method for making a holographic structure comprising an organic solvent based embossed layer, a metallic layer located onto the embossed layer, and an organic solvent based printing ink layer.

Among the advantages of such a structure is the eye- catching effect.

While having this and other advantages, such structures, particularly when integrated into film laminated structures, have disadvantages. For example a typical film structure will comprise the organic solvent based lacquer printed or applied, prior to embossment, onto a first side of a polyester (PET) film, typically a 12µm thick film. Once this lacquer is applied to this PET film, it is embossed so as to produce the holographic pattern. Once embossed, a metallic layer, typically aluminium, is vaporised or applied in another manner onto the embossed lacquer to form the "holographic core". The PET side which is not covered by the embossed lacquer can be thereafter laminated to other films, for example a 180 µm thick PE polyethylene film. Once this is done, printing can occur. However, it was found that direct printing onto the metallic layer was leading to dissolution of the embossed layer by penetration of the ink solvents through the thin metallic layer.

However, all these film structures show dissolution of the embossed lacquer due to ink solvent going through the metallic layer.

The invention seeks to provide a method for making a holographic structure of the above mentioned kind which does not lead to dissolution of the embossed lacquer.

### Summary of the invention

In accordance with the invention, this object is accomplished by a method for making a holographic structure comprising the steps of:
- producing a pattern on an organic solvent based embossed layer to exhibit a holographic effect;
- applying a metallic layer onto the embossed layer;
- adding a primer and a printing ink layer, such that the printing ink layer and the metallic layer are solely separated by the primer; wherein the primer is water solvent based and wherein the printing ink layer is organic solvent based.

A process in accordance with the invention has a number of advantages. Since the metallic layer and the printing ink layer are separated by the water solvent primer, migration of the organic solvent from the ink layer through to the water solvent based primer is prevented, as the organic solvent was found not to migrate through a water solvent based layer. Therefore, dissolution of the embossed lacquer by migration of the organic solvent present in the ink layer is avoided.

### Detailed description of the invention

The invention relates to a method for making a holographic structure. By a holographic structure, it should be understood that the structure is exhibiting a three dimensional eye-catching impression based on the metallisation of an embossed layer. The holographic structure comprises an organic solvent based embossed layer. By organic solvent based, it should be understood that the layer is applied together with a solvent, for example by a printing technique, the solvent being organic. The layer is embossed by processes already known by the man skilled in the art of making holograms. Typically, embossment is obtained by application of a pressure onto the layer, so as to produce the pattern which will exhibit the holographic effect. This holographic effect is produced in combination with the metallic layer located onto the embossed layer. Typically, this metallic layer is an aluminium layer, which is applied by vaporisation, thereby giving a thickness of a few atomic layers. Further, the holographic structure comprises an organic solvent based printing ink layer. This layer may comprise one or more inks having various colours, these being typically applied by the usual printing techniques together with a solvent, which is an organic solvent in the structure of the invention. It should be mentioned that an organic solvent should be understood as being non aqueous. Additionally, the printing ink layer and the metallic layer are solely separated by a water solvent based primer. By solely separated, it should be understood that no laminated layers are to be found between the printing ink layer and the metallic layer. It is necessary that the primer is water-based so as to prevent migration of the solvent from the inks into the embossed layer through pin-holes which usually are present in the thin metallic layer. Indeed, migration of organic solvents through the metallic layer was found to dissolve the embossed layer. It should be understood that the primer could comprise several layers itself, although such layers should not be laminated but applied together with a water based solvent.

In a preferred embodiment, the embossed layer is formed from a lacquer applied to a thermoplastic film, the thermoplastic film being preferably a poly-ethylene-therephtalate film. In a more preferred embodiment, this thermoplastic film is laminated to another thermoplastic film, such as a polyethylene film for example.

In the most preferred embodiment according to the invention, the embossed layer is an acrylic based lacquer which is deposited on a 12 µm polyester film using toluene, butyl acetate or ketones as an organic solvent. This embossed layer is thereafter covered with an aluminium layer, which is itself covered with the water solvent based primer which is an aqueous based acrylic, as in a preferred embodiment whereby the water solvent based primer comprises acrylic compounds. The primer is therefore forming a barrier to the migration of the organic solvents comprised in the printed ink layer which is applied onto the primer. In this most preferred embodiment, a white ink and colored inks are printed, the white ink having an ethyl-acetate solvent and the coloured inks having an ethanol solvent. Indeed it was found preferable to use different organic solvents for the ink in order to avoid dissolution of a first ink when a second ink is applied. Indeed, in a preferred embodiment, the printing ink layer comprises a coloured ink and a white ink, the coloured ink having ethanol as an organic solvent and the white ink having ethyl-acetate as an organic solvent. A two-component lacquer is then applied onto the printed ink layer to protect the ink. The side of the PET film which is not covered by the embossed layer is then laminated to a 180 µm polyethylene film. A package made from this film laminate comprising a holographic structure according to the invention allows to avoid dissolution of the embossed layer while maintaining the holographic appearance: Further, this package revealed to be suitable for use as a refill pouch for laundry product when made according to the process described in EP626319. Further, this package can be used to contain up to 3 liters of liquid laundry product, filling occurring at normal production speed, without need for an enlarged head space as would be needed in case of a thicker and more rigid film. Another package is foreseen, whereby each side of the film is made from a thermoplastic material. This may be achieved by applying an extra thin layer of polyethylene, such that both sides of the film could be thermo-sealed. Such a package is particularly well suited for granules laundry products packaging.

## Claims

1. A method for making a holographic structure comprising the steps of:
- producing a pattern on an organic solvent based embossed layer to exhibit a holographic effect;
- applying a metallic layer onto the embossed layer;
- adding a primer and a printing ink layer, such that the printing ink layer and the metallic layer are solely separated by the primer;
**characterized in that** the primer is water solvent based and **in that** the printing ink layer is organic solvent based.

2. A method according to claim 1 further comprising the step of forming the embossed layer from a lacquer and applying the embossed layer to a thermoplastic film.

3. A method according to claim 2 wherein the thermoplastic film is a polyester film.

4. A method according to claim 2 whereby comprising the step of laminating the thermoplastic film to another thermoplastic film.

5. A method according to claim 1 wherein the metallic layer is an aluminium layer.

6. A method according to claim 1 wherein the organic solvent based embossed layer is an acrylic based lacquer.

7. A method according to claim 1 wherein the printing ink layer comprises a coloured ink and a white ink, the coloured ink having ethanol as an organic solvent and the white ink having ethyl - acetate as an organic solvent.

8. A method according to claim 1 wherein the water solvent based primer comprises acrylic compounds.

9. A method of making a package from a film laminate comprising a holographic structure made according to the method of claim 1.

10. A method according to claim 9, whereby each side of the film is made from thermoplastic material.

## Patentansprüche

1. Verfahren zur Herstellung einer holographischen Struktur, umfassend die Schritte:
- Erzeugen eines Musters auf einer, auf einem organischen Lösungsmittel basierenden, geprägten Schicht, um einen holographischen Effekt zu zeigen;
- Auftragen einer metallischen Schicht auf die geprägte Schicht;
- Zugabe eines Primers und einer Drucktintenschicht, sodass die Drucktintenschicht und die metallische Schicht nur durch den Primer voneinander getrennt sind;
**dadurch gekennzeichnet, dass** der Primer auf wässrigem Lösungsmittel basiert und dass die Drucktintenschicht auf einem organischen Lösungsmittel basiert.

2. Verfahren nach Anspruch 1, weiterhin umfassend die Schritte der Bildung der geprägten Schicht aus einem Lack und Auftragen der geprägten Schicht auf eine thermoplastische Folie.

3. Verfahren nach Anspruch 2, wobei die thermoplastische Folie eine Polyesterfolie ist.

4. Verfahren nach Anspruch 2, umfassend den Schritt des Laminierens der thermoplastischen Folie auf eine andere thermoplastische Folie.

5. Verfahren nach Anspruch 1, wobei die metallische Schicht eine Aluminiumschicht ist.

6. Verfahren nach Anspruch 1, wobei die auf einem organischen Lösungsmittel basierende, geprägte Schicht ein Lack auf Acrylbasis ist.

7. Verfahren nach Anspruch 1, wobei die Drucktintenschicht eine farbige Tinte und eine weiße Tinte umfasst, die farbige Tinte Ethanol als ein organisches Lösungsmittel besitzt und die weiße Tinte Ethylacetat als ein organisches Lösungsmittel besitzt.

8. Verfahren nach Anspruch 1, wobei der auf wässrigem Lösungsmittel basierende Primer Acrylverbindungen umfasst.

9. Verfahren zur Herstellung einer Verpackung aus einem Filmlaminat, umfassend eine holographische Struktur, hergestellt nach dem Verfahren nach Anspruch 1.

10. Verfahren nach Anspruch 9, wobei jede Seite der Folie aus einem thermoplastischen Material hergestellt ist.

## Revendications

1. Procédé de fabrication d'une structure holographique comprenant les étapes consistant à :
- produire un motif sur une couche gaufrée à base de solvant organique pour présenter un effet holographique ;
- appliquer une couche métallique sur la couche gaufrée ;
- ajouter un apprêt et une couche d'encre d'imprimerie, de telle sorte que la couche d'encre d'imprimerie et la couche métallique ne soient séparées que par l'apprêt ;
**caractérisé en ce que** l'apprêt est à base de solvant aqueux et **en ce que** la couche d'encre d'imprimerie est à base de solvant organique.

2. Procédé selon la revendication 1 comprenant en outre l'étape consistant à former la couche gaufrée à partir d'une laque et à appliquer la couche gaufrée sur un film thermoplastique.

3. Procédé selon la revendication 2 dans lequel le film thermoplastique est un film en polyester.

4. Procédé selon la revendication 2 comprenant l'étape consistant à stratifier le film thermoplastique sur un autre film thermoplastique.

5. Procédé selon la revendication 1 dans lequel la couche métallique est une couche d'aluminium.

6. Procédé selon la revendication 1 dans lequel la couche gaufrée à base de solvant organique est une laque à base d'acrylique.

7. Procédé selon la revendication 1 dans lequel la couche d'encre d'imprimerie comprend une encre colorée et une encre blanche, l'encre colorée ayant l'éthanol comme solvant organique et l'encre blanche ayant l'acétate d'éthyle comme solvant organique.

8. Procédé selon la revendication 1 dans lequel l'apprêt à base de solvant aqueux comprend des composés acryliques.

9. Procédé de fabrication d'un emballage à partir d'un stratifié en film comprenant une structure holographique fabriquée selon le procédé de la revendication 1.

10. Procédé selon la revendication 9 dans lequel chaque face du film est faite de matériau thermoplastique.
